# EUROPEAN PATENT APPLICATION

(11) **EP 4 632 043 A1**
(43) Date of publication of application: **15.10.2025**
(21) Application number: 24169764.8
(22) Date of filing: 11.04.2024
(51) Int. Cl.: C10G 21/27, B01D 11/00, B01D 53/14, C10G 29/06

(54) **METHOD FOR REMOVING HYDROGEN SULPHIDE AND SULFHYDRYL-CONTAINING COMPOUNDS FROM HYDROCARBON STREAMS**

(71) Applicant: TotalEnergies OneTech, 92400 Courbevoie (FR)
(72) Inventor: MONDKAR, Hemant Sunanda Surendra, 69360 Solaize (FR); TORT, Frederic, 69360 Solaize (FR); CUKIERMAN, Serge, 69360 Solaize (FR); FRETARD, David, 69360 Solaize (FR)
(74) Representative: Casalonga

(57) **Abstract**

The present invention relates to a method for removing hydrogen sulphide and/or organic compounds comprising at least one sulfhydryl group from a hydrocarbon stream, wherein said hydrocarbon stream is contacted with an aqueous composition containing at least one zinc and/or iron lignosulfonate salt.

The invention also relates to the use of at least one salt chosen from zinc lignosulfonate salts and iron lignosulfonate salts for removing hydrogen sulphide and/or organic compounds comprising at least one sulfhydryl group from a hydrocarbon stream.

## Description

The present invention relates to a method for removing hydrogen sulphide and/or organic compounds comprising at least one sulfhydryl group from a hydrocarbon stream containing them, wherein said stream is contacted with an aqueous composition comprising a particular lignosulfonate salt.

The present invention also relates to the use of such a lignosulfonate salt for removing hydrogen sulphide and/or organic compounds comprising at least one sulfhydryl group from a hydrocarbon stream.

Hydrogen sulphide (H₂S) is a colourless and fairly toxic, flammable and corrosive gas which has a characteristic odour at a very low concentration. Hydrogen sulphide is often present in liquid hydrocarbon streams of mineral origin such as in particular crude petroleum oils as well as hydrocarbon fractions and residues deriving from the distillation thereof. Hydrogen sulphide is also generally present in the vapour phase above such hydrocarbon liquid streams as well as in gazeous hydrocarbon streams of mineral origin such as LPG and natural gas. The hydrogen sulphide emissions can be harmful to workers operating in the production, transport, storage, and processing of such streams. It is therefore desirable to reduce or even eliminate the hydrogen sulphide emissions during the handling of said products.

Furthermore, legislation has been in place for years, imposing strict regulations on hydrogen sulphide levels of hydrocarbon streams in pipelines, in storage and shipping containers.

Similar problems arise with organic compounds comprising a sulfhydryl group (-SH) such as mercaptans R-SH, thiocarboxylic acids RC(O)SH, dithiocarboxylic acids RC(S)SH, with R denoting a hydrocarbon chain. Such sulfhydryl-containing compounds are very corrosive and are likely to release hydrogen sulphide.

Some of the most common methods for reducing the concentration of hydrogen sulphide and sulfhydryl-containing compounds in hydrocarbon streams containing them consist in contacting such hydrocarbon streams with a scavenging agent also referred to as "scavenger". A variety of chemical scavengers are available including non limitatively triazine derivatives such as monoethanolamine triazine (MEA-triazine) and monomethylamine triazine (MMA triazine); oxazolidine derivatives such as 3,3'-methylenebis(5-methyloxazolidine) also known as MBO; (ethylenedioxy)dimethanol also known as EDDM, glyoxal, formaldehyde, as well as organometallic scavengers such as ferrous gluconate.

However, such chemical hydrogen sulphide scavengers have the major drawback of not being not biodegradable.

Furthermore, the chemical hydrogen sulphide scavengers currently used have additional drawbacks. For example, glyoxal has been used extensively as hydrogen sulphide scavenger but suffers from a major drawback since aqueous glyoxal solutions are highly corrosive and cannot be used for instance in gas tower applications.

Triazine derivatives have recently become very commonly used, however they have the drawback of leading to the formation of deposits resulting from the further reaction and polymerization of dithiazine compounds. Such deposits can precipitate and accumulate in the devices and installations used for treating and transporting petroleum products.

Additionally, known organic scavengers are at least partially oil soluble and thus they transfer into hydrocarbon streams to be treated. This presence of chemical scavengers or of reaction products thereof into the hydrocarbon streams is not desired. In case of organometallic compounds, there is a further risk of poisoning the catalysts used in refining processes.

Thus, there remains a continuous need for providing new methods for eliminating hydrogen sulphide and other compounds comprising a sulfhydryl group which are present in hydrocarbon streams in an efficient, economic and safe manner.

In particular, there is an increased need for providing alternative methods which have less impact on the environment and do not have the drawbacks of existing methods.

The Applicant has now developed an efficient method for removing hydrogen sulphide and/or organic compounds comprising at least one sulfhydryl group from a hydrocarbon stream, wherein such a stream is contacted with an aqueous solution containing a zinc and/or an iron lignosulfonate salt.

Therefore, the present invention relates to a method for removing hydrogen sulphide and/or organic compounds comprising at least one sulfhydryl group from a hydrocarbon stream, wherein said hydrocarbon stream is contacted with an aqueous composition containing at least one zinc and/or iron lignosulfonate salt.

The method of the invention allows a very efficient removal of hydrogen sulphide and of sulfhydryl-containing compounds from hydrocarbon streams in a short contact time. It does not contain neither release any corrosive or aggressive products. It does not generate any solid products which may deposit in transportation lines or devices, storage and treating vessels.

Furthermore, the particular lignosulfonate salts used as scavenging agents in the method of the invention are bio-based and biodegradable. Their impact on the environment is greatly reduced with regard to existing chemical scavengers.

A further advantage is that the lignosulfonate salts used as scavenging agents are totally soluble in water and remain dissolved in water after contacting with hydrocarbon streams. In other terms, there is no transfer of metallic salts, neither of scavenging agents nor of reaction products thereof into the hydrocarbon streams.

The present invention also relates to the use of at least one salt chosen from zinc lignosulfonate salts and iron lignosulfonate salts for removing hydrogen sulphide and/or organic compounds comprising at least one sulfhydryl group from a hydrocarbon stream.

In the following, in the absence of any other indication, the limits of a value range are included within this range, particularly in the expressions "between" and "ranging from ... to ... ".

Moreover, the expressions "at least one" and "at least" used in the present description are respectively equivalent to the expressions "one or more" and "more than or equal to".

Finally, in a manner known per se, C_{N} compound or group designates a compound or a group containing in its chemical structure N carbon atoms.

### The lignosulfonate salts

The method of the present invention involves zinc lignosulfonate salts and iron lignosulfonate salts, which are known per se and commercially available.

Lignosulfonates are generally obtained as a by-product of the sulfite pulping process of wood, during which, the lignin networks are broken and sulfonate groups are introduced on the lignin polymeric structure. The transformed lignin is hence rendered water-soluble and can be separated from the cellulosic fibers and other wood material. Alternatively, lignin isolated by a different process may be sulfonated post-separation. The original lignin structure is preserved to a certain degree, so that lignosulfonates are usually considered as salts of lignosulfonic acid.

Lignosulfonates are generally regarded as randomly branched polyaromatic aqueous soluble anionic polymers. Hydrophilicity is imparted by the presence of anionic sulfonate groups, but also to a less extent by anionic carboxylate groups and phenolic hydroxyl groups. The counterion results from the pulping process and lignosulfonates are generally obtained as sodium, calcium, magnesium, or ammonia salts. The counterion can be replaced by a metallic cation such as zinc or iron by known ion exchange methods.

The lignosulfonates used in the method of the invention are selected from zinc lignosulfonate salts, iron lignosulfonate salts and mixtures thereof.

They are available as mixtures of anionic polymers having a molecular weight distribution, typically in the range of about 500 to about 200,000 Daltons.

According to a preferred embodiment, said at least one zinc and/or iron lignosulfonate salt is chosen from zinc lignosulfonate salts.

The aqueous composition advantageously contains said at least one zinc and/or iron lignosulfonate salt in a total amount ranging from 5 to 60% by weight, preferably from 10 to 50% by weight, more preferably from 15 to 40% by weight, and even more preferably from 20 to 30% by weight, relative to the total weight of the composition.

According to a preferred embodiment, the aqueous composition contains zinc lignosulfonate in a total amount ranging from 5 to 60% by weight, preferably from 10 to 50% by weight, more preferably from 15 to 40% by weight, and even more preferably from 20 to 30% by weight, relative to the total weight of the composition.

### The aqueous composition

The composition used in the method of the invention is aqueous which means that it contains water.

As the zinc and/or iron lignosulfonate salt(s) used in the present invention are fully soluble in water at ambient temperature (20°C) and atmospheric pressure (1,013.10⁵ Pa) the composition is under the form of a solution of said salt(s) in water.

The composition may further contain one or more water-miscible organic solvent(s), which may for example be chosen from (poly) oxyalkyl ethers, such as butyl carbitol (diethylene glycol monobutyl ether), polyethylene glycols, as well as mixtures thereof.

According to a preferred embodiment however, the composition does not contain any organic solvent. In other terms, water is the only liquid vehicle present in the composition.

### Additional scavengers

The aqueous composition used in the method of the invention may further contain one or more additional scavenging agent different from zinc lignosulfonate salts and iron lignosulfonate salts.

In such a case, said additional scavenging agent(s) is (are) generally present in a total weight concentration which is inferior or equal to the total concentration of zinc and iron lignosulfonate(s). In other terms, the weight ratio between the total amount of zinc lignosulfonate salts and iron lignosulfonate salts and the total amount of additional scavenging agent(s) is at least 1.

According to a first embodiment, the composition further contains glyoxal. In such embodiment, the concentration of glyoxal preferably ranges from 1 to 20% by weight, more preferably from 2 to 10% by weight, with regard to the total weight of the composition.

According to a second embodiment, the composition further contains formaldehyde. In such embodiment, the concentration of formaldehyde preferably ranges from 1 to 10% by weight, more preferably from 2 to 5% by weight, with regard to the total weight of the composition.

According to a third embodiment, the composition further contains (ethylenedioxy)dimethanol (EDDM). In such embodiment, the concentration of (ethylenedioxy)dimethanol preferably ranges from 1 to 10% by weight, more preferably from 2 to 5% by weight, with regard to the total weight of the composition.

### Additional compounds

The aqueous composition used in the method of the invention may further contain one or more additional compounds different from the above described scavenging agents.

According to a preferred embodiment, the composition further contains at least one dispersant.

The aqueous composition may further comprise at least one defoamer, preferably at least one silicone-based defoamer.

The defoamers are preferably chosen from polydimethylsiloxane polymers, more preferably from grafted polydimethylsiloxane polymers.

The composition of the invention may contain an amount of defoamer ranging from 0.1 to 2% by weight, relative to the total weight of the composition.

### The method

In the method of the present invention a hydrocarbon stream containing hydrogen sulphide and/or organic compounds comprising at least one sulfhydryl group is contacted with an aqueous composition as described above.

As hydrocarbon stream, it is meant in a manner know per se a stream containing hydrocarbons (hydrocarbon compounds) as main component.

By hydrocarbons (or hydrocarbon compounds) is meant in a manner known per se compounds made of carbon and hydrogen atoms.

Typically, said hydrocarbon stream contains at least 80% by weight of hydrocarbons, preferably at least 90% by weight, more preferably at least 95 % by weight and even more preferably at least 99 % by weight. According to a preferred embodiment, said hydrocarbon stream consists of hydrocarbons.

The hydrocarbon stream may be either a single-phase hydrocarbon stream or a multiphase stream comprising oil/water or oil/water/gas or gas/water.

In particular, the hydrocarbon stream may comprise less than 20% by weight of water, in particulier less than 10% by weight, and more particularly less than 5% by weight of water.

Thus, the invention does not encompass the treatment of aqueous streams, which are defined as streams containing water as main component (at least 60% by weight of water, preferably at least 70% by weight, more preferably at least 80 % by weight and even better at least 90% by weight).

Likewise, the present invention does not encompass the treatment of drilling fluids.

The hydrocarbon stream may be a liquid stream, a gaseous stream or both ie a stream containing a liquid phase and a gazeous phase.

The hydrocarbon stream is typically selected from crude petroleum oils, hydrocarbon fractions and residues deriving from the distillation of crude petroleum oils and natural gas.

As typical examples of hydrocarbon fraction deriving from the distillation of crude petroleum oils mention may be made of streams commonly known as light and heavy distillates, fuel oils, heavy fuel oils and light petroleum gas (LPG).

As typical examples of hydrocarbon residues deriving from the distillation of crude petroleum oils mention may be made of streams commonly known as atmospheric residues and vacuum residues.

Hydrocarbon streams may be selected from crude oils, hydrocarbon fractions and residues which typically comprise more than 70%wt of paraffins, preferably more than 90%wt of paraffins and even more preferably more than 95%wt of paraffins. In a manner known per see, paraffins denote alkanes.

The method of the invention is in particular used in the treatment of hydrocarbon streams in refining units.

The hydrocarbon stream may contain H₂S and/or mercaptans in total amounts which may range for example from 1 to 10 000 ppm by weight.

The aqueous composition is contacted with the hydrocarbon stream for a time sufficient to achieve an effective scavenging and removal of hydrogen sulphide and of organic compounds comprising at least one sulfhydryl group.

After this contacting step, the aqueous composition is separated from the hydrocarbon stream in order to recover a hydrocarbon stream having a reduced concentration of hydrogen sulphide and of organic compounds comprising at least one sulfhydryl group with regard to the initial hydrocarbon stream. According to a preferred embodiment, the method of the invention allows to recover a hydrocarbon stream which is devoid of hydrogen sulphide and of organic compounds comprising at least one sulfhydryl group.

The aqueous composition containing the products of reaction of hydrogen sulphide and of organic compounds comprising at least one sulfhydryl group with said zinc lignosulfonate and/or iron lignosulfonate salt(s) is also recovered for further treatments.

### Use

The present invention also encompasses the use of at least one salt chosen from a zinc lignosulfonate salt and an iron lignosulfonate salt for removing hydrogen sulphide and/or organic compounds comprising at least one sulfhydryl group from a hydrocarbon stream.

The organic compounds comprising at least one sulfhydryl group are especially chosen from mercaptans, thiocarboxylic acids and dithiocarboxylic acids.

According to a preferred embodiment, said at least one salt is used for scavenging hydrogen sulphide (H₂S) and mercaptans (compounds of formula RSH) in a hydrocarbon containing stream.

The mercaptans which needs to be eliminated are typically those of formula RSH wherein R is an alkyl or alkenyl group containing from 1 to 8, preferably from 1 to 6 and more preferably from 1 to 4 carbon atoms.

The hydrocarbon stream may be of liquid and/or gaseous nature.

The hydrocarbon stream is as described hereabove and is typically selected from crude petroleum oils, hydrocarbon fractions and residues deriving from the distillation of crude petroleum oils and natural gas.

The hydrocarbon stream may contain H₂S and/or mercaptans in total amounts which may range for example from 1 to 10 000 ppm by weight.

Typically in the present invention, the hydrocarbon stream is not a drilling fluid.

## Claims

1. Method for removing hydrogen sulphide and/or organic compounds comprising at least one sulfhydryl group from a hydrocarbon stream, wherein said hydrocarbon stream is contacted with an aqueous composition containing at least one zinc and/or iron lignosulfonate salt.

2. Method as defined in claim 1, wherein said aqueous composition contains said at least one zinc and/or iron lignosulfonate salt in a total amount ranging from 5 to 80% by weight, preferably from 10 to 70% by weight, more preferably from 20 to 60% by weight, and even more preferably from 30 to 50% by weight, relative to the total weight of the composition.

3. Method as defined in any preceding claim, wherein said at least one zinc and/or iron lignosulfonate salt is chosen from zinc lignosulfonate salts.

4. Method as defined in any preceding claim, wherein said aqueous composition further contains one or more additional scavenging agent(s) different from zinc lignosulfonate salts and from iron lignosulfonate salts, preferably in a weight ratio between the total amount of zinc lignosulfonate salts and iron lignosulfonate salts and the total amount of additional scavenging agent(s) of at least 1.

5. Method as defined in claim 4, wherein said aqueous composition contains glyoxal, preferably at a concentration ranging from 1 to 20% by weight, more preferably from 2 to 10% by weight, with regard to the total weight of the composition.

6. Method as defined in claim 4, wherein said aqueous composition contains formaldehyde, preferably at a concentration ranging from 1 to 10% by weight, more preferably from 2 to 5% by weight, with regard to the total weight of the composition.

7. Method as defined in claim 4, wherein said aqueous composition contains (ethylenedioxy)dimethanol, preferably at a concentration ranging from 1 to 10% by weight, more preferably from 2 to 5% by weight, with regard to the total weight of the composition

8. Method as defined in any preceding claim, wherein said aqueous composition further contains at least one dispersant.

9. Method as defined in any preceding claim, wherein the hydrocarbon stream is selected from crude petroleum oils, hydrocarbon fractions and residues deriving from the distillation of crude petroleum oils and natural gas.

10. Method as defined in any preceding claim, wherein after the contacting step, the aqueous composition is separated from the hydrocarbon stream and a hydrocarbon stream is recovered, which has a reduced concentration of hydrogen sulphide and of organic compounds comprising at least one sulfhydryl group with regard to the initial hydrocarbon stream.

11. Use of at least one salt chosen from zinc lignosulfonate salts and iron lignosulfonate salts for removing hydrogen sulphide and/or organic compounds comprising at least one sulfhydryl group from a hydrocarbon stream.

12. Use as defined in claim 11, for scavenging hydrogen sulphide and mercaptans in a hydrocarbon containing stream.

13. Use as defined in anyone of claims 11 and 12, wherein said hydrocarbon stream is selected from crude petroleum oils, hydrocarbon fractions and residues deriving from the distillation of crude petroleum oils and natural gas.
